# EUROPÄISCHE PATENTANMELDUNG

(11) **EP 0 933 182 A2**
(43) Veröffentlichungstag der Anmeldung: **04.08.1999**
(21) Anmeldenummer: 98122919.8
(22) Anmeldetag: 02.12.1998
(51) Int. Cl.: B29C 33/68, B32B 31/00, B29C 70/00

(54) **Verfahren zur Herstellung von Faserverbund-Formteilen, insbesondere Hohlprofilteilen**

(30) Priorität: 28.01.1998 DE 19803062
(71) Anmelder: Lebmeier, Rainer Dipl.-Ing., 86391 Stadtbergen (DE)
(72) Erfinder: Lebmeier, Rainer Dipl.-Ing., 86391 Stadtbergen (DE)
(74) Vertreter: Liebau, Gerhard (DE)

(57) **Zusammenfassung**

Bei diesem Verfahren zur Herstellung von Faserverbund-Formteilen, insbesondere Hohlprofilteilen, aus faserverstärktem Kunstharz, werden mit wärmeaushärtbarem Kunstharz vorimprägnierte, mindestens einseitig mit einer Trennfolie (2) abgedeckte Fasermatten (1)(Prepregs) in mehreren Lagen übereinander angeordnet. Der so gebildete Schichtkörper (3) wird gegebenenfalls in einem Formwerkzeug einer ersten Temperaturbehandlung unterworfen. Hierbei wird der Schichtkörper (3) auf eine solche Temperatur abgekühlt, bei der die in den Prepregs (1) enthaltenen Wasseranteile gefroren und die Prepregs (1) dadurch nicht mehr klebrig sind. Dann werden die Trennfolien (2) entfernt und anschließend, während der Schichtkörper (3) noch auf eine Temperatur abgekühlt ist, bei welcher die in den Prepregs (1) enthaltenen Wasseranteile noch gefroren sind, wird in einem Formwerkzeug Druck auf die eine Oberfläche des Schichtkörpers (3) ausgeübt und die andere Oberfläche desselben an die Innenwand des Formwerkzeuges angepreßt. Unter Aufrechterhaltung des Druckes wird das Kunstharz in einer zweiten Temperaturbehandlung bei erhöhter Temperatur ausgehärtet.

## Beschreibung

Die Erfindung betrifft ein Verfahren zur Herstellung von Faserverbund-Formteilen, insbesondere Hohlprofilteilen, aus faserverstärktem Kunstharz, bei dem mit wärmeaushärtbarem Kunstharz vorimprägnierte, mindestens einseitig mit einer Trennfolie abgedeckte Fasermatten (Prepregs) in mehreren Lagen übereinander angeordnet werden, der so gebildete Schichtkörper gegebenenfalls in einem Formwerkzeug einer ersten Temperaturbehandlung unterworfen wird, dann die Trennfolien entfernt und anschließend in einem Formwerkzeug durch Druck auf die eine Oberfläche des Schichtkörpers dieser mit seiner anderen Oberfläche an eine Innenwand des Formwerkzeuges gepreßt und unter Aufrechterhaltung des Druckes das Kunstharz in einer zweiten Temperaturbehandlung bei erhöhter Temperatur ausgehärtet wird.

Wenn aus mehreren Prepregs Faserverbund-Formteile mit relativ scharfen Konturen hergestellt werden sollen, ergeben sich Schwierigkeiten. Nach Entfernung der Trennfolien weisen die Prepregs nämlich eine klebrige Oberfläche auf. Wenn die übereinandergelegten Schichten dann in dem Formwerkzeug der erforderlichen Verformung unterworfen werden, ergeben sich hohe Reibungskräfte zwischen den benachbarten, kunstharzimprägnierten Prepregs. Je kleiner der Deformationsradius ist, desto größer werden die Reibungskräfte zwischen den Schichten, die dadurch verursacht werden, daß die Schichten sich gegeneinander verschieben müssen, um die gewünschte Formgebung des Faserverbund-Formteiles zu erhalten. Es kann zu höchst unerwünschten Fehlorientierungen der Faserlagen, zu Faserbrüchen und auch zu Faltenbildung kommen.

Um die Reibungskräfte zwischen den Schichten während der Formgebung von kompliziert gestalteten Faserverbund-Formteilen mit kleinen Krümmungsradien während der Formgebung zu vermindern, wurde in der DE 35 41 954 C2 ein Verfahren der eingangs erwähnten Art vorgeschlagen. Bei diesem bekannten Verfahren werden die Prepregs mit den daran haftenden Trennfolien in mehreren Lagen übereinandergestapelt und in ein Formwerkzeug gebracht. In einer hydraulischen Presse wird Druck auf das Formwerkzeug ausgeübt und es erfolgt zunächst bei einer Temperatur von etwa 125°C eine Teilhärtung des Kunstharzes während einer Dauer von etwa 90 Minuten. Danach läßt man die noch unter Druck stehende Form abkühlen. Nach dem Öffnen der Form werden die Schichten voneinander getrennt und die Trennfolien entfernt. Die vorgeformten Prepregs werden dann wieder übereinandergestapelt und der Stapel erneut in ein Formwerkzeug gebracht, in welchem dann unter Anwendung von Druck und Temperatur das Kunstharz endgültig ausgehärtet wird. Dieses bekannte Verfahren hat jedoch verschiedene Nachteile. Die Teilhärtung muß in einer dem fertigen Formteil entsprechenden Form nicht nur unter erhöhter Temperatur sondern auch in einer hydraulischen Presse unter Anwendung von Druck über längere Zeit erfolgen. Der Druck muß auch während der Abkühlphase aufrechterhalten werden. Dies erfordert einen entsprechenden Maschinen- und Zeitaufwand. Da bei der Teilhärtung zwischen den Prepregs Harz austreten kann, muß das Formwerkzeug nach der Teilhärtung gereinigt werden. Zur Teilhärtung ist eine beheizbare Vorform oder, falls die Teilhärtung in der endgültigen Form vorgenommen wird, ist eine größere Anzahl von endgültigen Formen erforderlich, da diese durch die Teilhärtung und die Endhärtung länger belegt sind. Nach der Teilhärtung und dem Entfernen der Trennfolien müssen die vorgeformten Prepregs wieder sehr genau übereinandergestapelt und durch Punkt-, Laser- oder Ultraschallschweißung gegeneinander fixiert werden, da sie sich beim endgültigen Pressen wegen der noch bestehenden Klebrigkeit des Harzes und der hohen Reibung zwischen den Schichten nicht mehr gegenseitig verschieben lassen. Auch dieses exakte Stapeln und Schweißen erfordert einen erheblichen Arbeitsaufwand. Wenn das Übereinanderstapeln der vorgeformten Prepregs nicht mit der nötigen Sorgfalt durchgeführt wird, können zwischen den einzelnen Schichten Hohlräume entstehen und es kann beim endgültigen Pressen auch zu Faltenbildung und Faserbruch kommen. Durch die Teilhärtung ändern sich die Eigenschaften des Harzes, so daß bereits bekannte Erfahrungswerte, wie z.B. Wassergehalt, Härtedauer, Härtedruck, E-Modulknick neu gewonnen werden müssen. Außerdem erfordert das Pressen von teilweise ausgehärteten Prepregs einen wesentlich höheren Preßdruck. Schließlich ist dieses bekannte Verfahren nicht zur Herstellung von Hohlkörpern geeignet.

Der Erfindung liegt daher die Aufgabe zugrunde, ein Verfahren zur Herstellung von Faserverbund-Formteilen der eingangs erwähnten Art aufzuzeigen, welches in wirtschaftlicher Weise mit verhältnismäßig geringem Arbeits- und Zeitaufwand die Herstellung von Faserverbund-Formteilen, insbesondere auch von Hohlprofilteilen, mit komplizierten Konturen und/oder relativ scharfen Kanten ermöglicht.

Dies wird nach der Erfindung dadurch erreicht, daß der Schichtkörper bei der ersten Temperaturbehandlung auf eine solche Temperatur abgekühlt wird, bei der die in den Prepregs enthaltenen Wasseranteile gefroren und die Prepregs dadurch nicht mehr klebrig sind, daß dann die Trennfolien entfernt und anschließend, während der Schichtkörper noch auf eine Temperatur abgekühlt ist, bei welcher die in den Prepregs enthaltenen Wasseranteile noch gefroren sind, der Druck auf die eine Oberfläche des Schichtkörpers ausgeübt und die andere Oberfläche desselben an die Innenwand des Formwerkzeuges angepreßt wird, und daß dann unter Erhitzung ausgehärtet wird.

Die Erfindung geht also von dem Gedanken aus, die Prepregs in einer ersten Verfahrensstufe nicht zu erhitzen sondern auf eine unter dem Gefrierpunkt liegende Temperatur abzukühlen. Dieses Abkühlen kann wesentlich einfacher und in kürzerer Zeit erfolgen als die beim eingangs erwähnten Verfahren vorgesehene Teilhärtung. Wenn für eine Vorformung der Prepregs beim Abkühlen Formen verwendet werden, dann können diese relativ einfach sein und auch der erforderliche Druck ist relativ gering; meist wird die Masse der Form zur Vorformung ausreichen. Ein Reinigen der bei der Abkühlung verwendeten Formen ist nicht erforderlich, da das Harz nicht erwärmt sondern abgekühlt wird und deshalb auch nicht austritt. Bei einfacheren Konturen des fertigen Formteiles und auch bei der Herstellung von Hohlprofilteilen ist es während der Abkühlphase vielfach nicht erforderlich, Formen zu verwenden. Durch das Abkühlen des Schichtkörpers auf eine Temperatur, bei der die in den Prepregs enthaltenen Wasseranteile gefroren sind, wird zweierlei erreicht. Zum einen verliert das Harz einen wesentlichen Teil seiner Klebrigkeit. Zum anderen wird das im Harz enthaltene Wasser gefroren und es bilden sich auch auf der Oberfläche feine Eisteile. Durch diese Eisteile, deren Anteil auch noch durch Kondensation und Gefrieren von Luftfeuchtigkeit der Umgebungsluft erhöht wird, entsteht an der Oberfläche der Prepregs ein starker Gleiteffekt. Wenn die einzelnen Prepregs nach Entfernen der Trennfolie wieder aufeinandergelegt werden, dann muß dies nicht mit besonderer Genauigkeit erfolgen, denn dank des Gleiteffekts können sich die Prepregs während der endgültigen Formgebung leicht gegeneinander verschieben. Es ist somit auch die Bildung von komplizierten Faserverbund-Formteilen, insbesondere solchen mit relativ scharfen Kanten, möglich. Durch die Anwendung von Kälte werden auch die Harzeigenschaften nicht verändert. Schließlich können auch Hohlprofilteile mit relativ scharfen Kanten problemlos hergestellt werden, wie nachstehend noch näher erläutert wird. Auch ist beim Aushärten nur ein geringer Druck von 2 - 8 bar erforderlich, je nach Lagenzahl, Harzsystem und gewünschtem Harzgehalt. Man kann infolgedessen mit mechanischen Preßverfahren, wie z.B. Dehnschrauben oder Federn, arbeiten.

Vorteilhafte Verfahrensmaßnahmen sind in den Unteransprüchen gekennzeichnet.

Die Erfindung ist in folgendem, anhand von in der Zeichnung dargestellten Ausführungsbeispielen näher erläutert. Es zeigen:
- Figur 1: einen Schichtkörper für ein Hohlprofilteil in vorgeformtem Zustand,
- Figur 2: ein zweiteiliges Formwerkzeug mit dem darin angeordneten Hohlprofil während der Aushärtung,
- Figur 3: einen Schichtkörper in vorgeformtem Zustand,
- Figur 4: ein Formwerkzeug mit dem darin angeordneten Formteil während der Aushärtung.

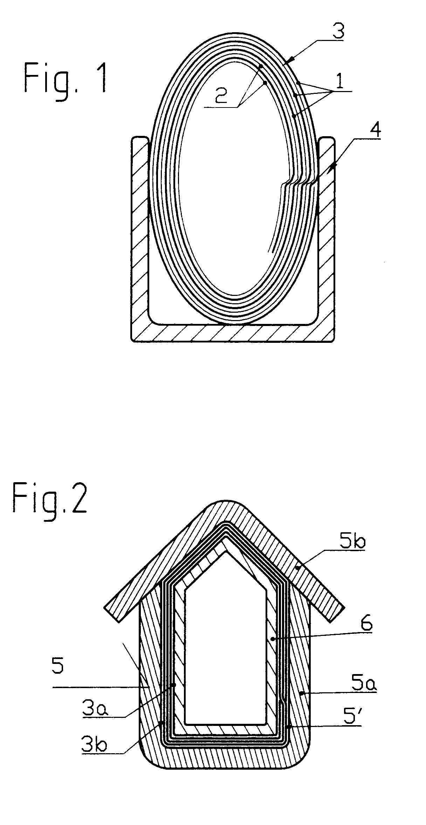

Anhand der Figuren 1 und 2 ist das erfindungsgemäße Verfahren im Zusammenhang mit der Herstellung eines Hohlprofilteiles beschrieben. Aus einem Prepreg 1, d.h. aus einer mit Wärme aushärtbarem Kunstharz vorimprägnierten Fasermatte z.B. aus einem Carbonfasergewebe welches einseitig oder gegebenenfalls auch beidseitig mit einer Trennfolie, z.B. Silikonpapier, abgedeckt ist, wird durch Aufrollen ein Schichtkörper 3 in Form eines hohlen Wickels gebildet. Dieser Schichtkörper besteht im gezeichneten Fall aus drei Prepregschichten. Die Länge der Prepregschicht, aus der der Wickel aufgerollt wird, ist dabei so bemessen, daß im endgültigen Formwerkzeug die gewünschte Anzahl von Prepreg-Lagen entsteht. Der so gebildete, zunächst runde Wickel kann dann in eine Gestalt gebracht werden, die in grober Annäherung der Innenkontur des endgültigen Formwerkzeuges entspricht. Zu diesem Zweck wird der gewickelte Schichtkörper 3 in eine Vorform 4 mit U-förmigem Querschnitt eingesetzt. In dieser Vorform 4, die aus billigem und dünnwandigem Material bestehen kann, weil sie keinen Druck aushalten muß, wird der Schichtkörper bei einer ersten Temperaturbehandlung auf eine Temperatur abgekühlt, bei der die in den Prepregs enthaltenen Wasseranteile gefroren sind. Um bei der nachstehend beschriebenen Weiterbearbeitung ausreichend Zeit zu haben und sicherzustellen, daß nach der Weiterbearbeitung immer noch die Wasseranteile gefroren sind, wird auf eine Temperatur von weniger als -10°C (bei Atmosphärendruck), z.B. auf eine Temperatur im Bereich zwischen -10° bis -25°C abgekühlt. Diese Temperatur kann in Kühlräumen, Tiefkühltruhen oder -schränken bzw. auch durch Flüssigkeiten oder Gase (O₂, N₂ usw.) erreicht werden. Der Schichtkörper 3 wird dann aus der Vorform in gekühltem Zustand herausgenommen und die Trennfolie 2 abgezogen. Dieses Abziehen wird durch die Kühlung sehr erleichtert, denn die Trennfolie 2 hat dann nur noch eine geringe Haftung am Prepreg. Das Abziehen der Trennfolie 2 aus dem gewickelten Schichtkörper 3 bereitet keine Schwierigkeiten, weil sich beim Herausnehmen des Schichtkörpers 3 aus der Vorform 4 die einzelnen Lagen voneinander abheben. Durch das Tiefkühlen des Schichtkörpers werden die im Prepreg 1 enthaltenen Wasseranteile gefroren und es bilden sich auch auf der Oberfläche des Prepregs 1 Eispartikel. Durch das Tiefgefrieren verringert sich auch die Klebrigkeit des im Prepreg enthaltenen Harzes, wobei jedoch immer noch eine gewisse Restklebrigkeit des reinen Harzes verbleibt. Die an der Oberfläche des Prepregs gebildeten Eispartikel bilden eine Gleitschicht, welche die Restklebrigkeit des Kunstharzes unwirksam macht. Die Gleitschicht aus Eispartikeln ist eine wesentliche Voraussetzung für die weitere Verarbeitung des Schichtkörpers 3. Durch Kondensation und Gefrieren der in der Umgebungsluft enthaltenen Wasseranteile können sich zusätzliche Eispartikel auf der Oberfläche des Prepregs bilden, die den Gleiteffekt erhöhen.

Der von der Trennfolie 2 befreite ovale Schichtkörper wird dann in das in Figur 2 dargestellte eigentliche Formwerkzeug 5, welches aus einem Unterteil 5a und einem abnehmbaren Oberteil 5b besteht, bei abgenommenem Oberteil von oben her in das Unterteil 5a eingesetzt. Das Formwerkzeug 5 wurde vorher mit einer Trennschicht, z.B. Teflon, versehen und zweckmäßig ebenfalls auf eine Temperatur unter 0°C abgekühlt. In das Innere des gewickelten hohlen Schichtkörpers 3 wird in axialer Richtung des Schichtkörpers 3 ein aufblasbarer, mit einer Trennschicht, z.B. Silikon, versehener Schlauch 6 eingeschoben, der ebenfalls vorgekühlt sein kann. Die Form wird dann durch Aufsetzen des Oberteils 5b auf das Unterteil 5a geschlossen. Durch Aufblasen des Schlauches 6, z.B. mit gekühlter Preßluft, wird auf die innere Oberfläche 3a des Schichtkörpers 3 Druck ausgeübt und hierdurch die äußere Oberfläche 3b an die Innenwand 5' des Formwerkzeuges 5 angepreßt. Dies alles muß erfolgen, während der Schichtkörper 3 noch auf eine Temperatur abgekühlt ist, bei welcher die im Prepreg enthaltenen Wasseranteile noch gefroren sind. In diesem Zustand bilden nämlich diese Wasseranteile die zuvor beschriebene Gleitschicht, die es ermöglicht, daß sich die einzelnen Lagen trotz einer gewissen Restklebrigkeit des Harzes leicht gegeneinander verschieben lassen. Infolgedessen legt sich der Schichtkörper 3 mit seiner äußeren Oberfläche 3b dicht an die Innenfläche 5' des Formwerkzeuges an und auch die weiter innen liegenden Lagen legen sich wiederum dicht an die weiter außen befindlichen Lagen an, wobei die eingangs erwähnten Probleme von Faserstauchungen und -faltungen und auch Überlastungen der Fasern vermieden werden. Es lassen sich auf diese Weise auch komplizierte Hohlprofilteile und sonstige Faserverbund-Formteile mit relativ scharfen Kanten herstellen. Unter Aufrechterhaltung des Innendruckes im Schlauch 6 wird dann das geschlossene Formwerkzeug 5 auf Aushärtetemperatur gebracht, um die gewünschten mechanischen sowie physikalischen Eigenschaften zu erhalten. Je nach Harzsystem liegt die Aushärtetemperatur bei 80 - 180°C, wobei der vom Schlauch 6 auf die innere Oberfläche 3a ausgeübte Druck etwa 2 - 8 bar beträgt, je nach Harzsystem, Lagenzahl und Harzgehalt. Nach Erreichen der erforderlichen Aushärtezeit wird das Formwerkzeug 5 abgekühlt und das fertige Hohlprofilteil kann dann aus dem geöffneten Formwerkzeug 5 entnommen und der Schlauch 6 entfernt werden.

Wenn das Hohlprofilteil eine größere Anzahl von Prepreglagen aufweisen soll, dann kann man so verfahren, daß man zunächst in der zuvor beschriebenen Weise ein Hohlprofilteil herstellt und teilweise oder vollständig aushärtet. Dieses Hohlprofilteil wird dann zusammen mit dem Formwerkzeug auf eine Temperatur unter 0°C abgekühlt und es wird ein weiterer gewickelter und tiefgekühlter Schichtkörper in axialer Richtung in das zuvor gefertigte Hohlprofilteil eingeschoben. Nach dem Einschieben eines Schlauches kann dann der weitere Schichtkörper durch Aufblasen des Schlauches an die innere Oberfläche des ersten Hohlprofilteiles angepreßt und anschließend bei erhöhter Temperatur in der zuvor beschriebenen Weise ausgehärtet werden.

Dieser Vorgang kann mehrfach wiederholt werden bis die gewünschte Wandstärke erreicht ist.

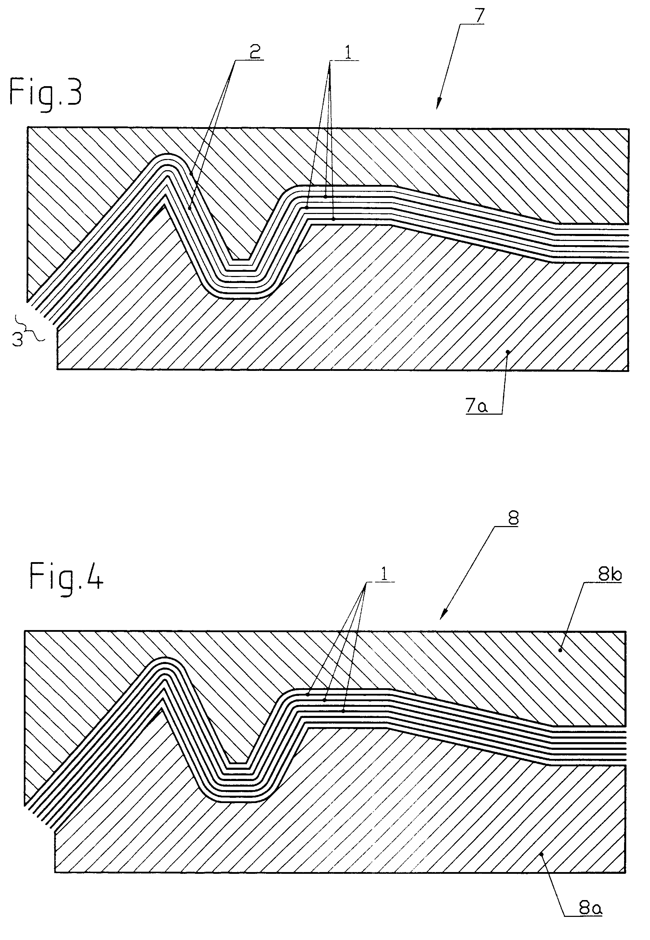

Anhand der Figuren 3 und 4 wird nachfolgend die Herstellung eines Faserverbund-Formteiles beschrieben, welches relativ scharfe Kanten aufweist. Von diesem Formteil ist jedoch nur ein Teilabschnitt gezeigt. Auf das Unterteil 7a einer Vorform 7, die ebenfalls verhältnismäßig dünnwandig, leicht und mit geringer Genauigkeit hergestellt sein kann, und die daher kostengünstig herstellbar ist, werden mehrere Lagen von Prepregs 1 gelegt, die jeweils einseitig mit einer Trennfolie 2, z.B. Silikonpapier, abgedeckt sind. In der Zeichnung, Figur 3, sind der Übersichtlichkeit halber nur drei Prepreglagen dargestellt, jedoch entspricht die tatsächliche Anzahl der Lagen der gewünschten Anzahl im fertigen Formteil. Es wird dann das Oberteil 7b der Vorform aufgesetzt und ein solcher Druck auf die beiden Formteile 7a und 7b ausgeübt, daß sich die Prepreglagen der Innenkontur der Vorform 7 anpassen. Dabei kann je nach Lagenzahl und Form die Masse der Vorform zur Druckerzeugung ausreichen. Da die einzelnen Prepreglagen 1 jeweils durch eine dazwischenliegende Trennfolie 2 voneinander getrennt sind, ist zwischen den einzelnen Lagen nur eine geringe Reibung vorhanden. Infolgedessen können sich die einzelnen Prepreglagen 1 gegeneinander beim Zusammendrücken der Formteile 7a und 7b gegeneinander leicht verschieben und eine von der Innenkontur der Vorform 7 bestimmte Form annehmen. Die beiden Formteile 7a, 7b werden dann in zusammengedrücktem Zustand in der zuvor beschriebenen Weise tiefgekühlt. Es wird auf diese Weise aus den verformten Prepreglagen 1 mit den dazwischenliegenden Trennfolien 2 ein Schichtkörper 3 gebildet, dessen Schichten jedoch nicht zusammenkleben. Nachdem der Schichtkörper 3 eine vorbestimmte Temperatur, die bei -10° und tiefer liegen kann, erreicht hat, wird die Vorform 7 geöffnet. Die Trennfolien 2 werden von den Prepreglagen 1, die ihre Form in etwa beibehalten, abgelöst. Die Oberfläche jeder Prepreglage weist dann die vorerwähnte, aus Eispartikeln bestehende Gleitschicht auf. In diesem Zustand werden die Prepreglagen 1 auf das Unterteil 8a des Formwerkzeuges 8 gelegt und dann das mit einer Trennschicht, z.B. Teflon, versehene Formwerkzeug durch Aufbringen des Oberteils 8b geschlossen. Auch in diesem Fall ist es vorteilhaft, die beiden Formteile 8a, 8b zu kühlen, so daß nach dem Schließen des Formwerkzeuges sich die Prepreglagen 1 noch in gekühltem Zustand befinden und an ihrer Oberfläche die erwähnte Gleitschicht vorhanden ist. Beim Zusammenpressen der Formteile 8a und 8b können infolgedessen die einzelnen Prepreglagen gegeneinander gleiten und eine der Innenkontur des Formwerkzeuges entsprechende Form annahmen. Das Zusammendrücken der Formteile 8a, 8b kann z.B. mittels Federn oder Dehnschrauben erfolgen. Anschließend erfolgt dann unter Aufrechterhaltung des Druckes das Aushärten bei erhöhter Temperatur, wie zuvor beschrieben.

Wenn die eigentlichen Formwerkzeuge, in denen das Aushärten unter Druck und Temperatur erfolgt, nicht vollständig ausgelastet sind, kann man das Vorformen der Prepreglagen, die jeweils mit einer Trennfolie 2 abgedeckt sind, in dem eigentlichen Formwerkzeug vornehmen, wie es anhand der Figur 3 im Zusammenhang mit einer Vorform beschrieben wurde. Es wird dann das eigentliche Formwerkzeug mit den dazwischen befindlichen Prepreglagen tiefgekühlt.

Bei einfacher geformten Formteilen kann man auch auf das Vorformen verzichten. Es werden dann die Prepreglagen ohne Verwendung einer Vorform oder eines Formwerkzeuges tiefgekühlt und nach dem Abziehen der Trennfolien in tiefgekühltem Zustand in das Formwerkzeug eingelegt. Beim Schließen und Zusammendrücken der Formteile 8a und 8b können dann dank der aus Eispartikeln bestehenden Gleitschicht sich die Prepreglagen gegeneinander verschieben und der Innenkontur des Formwerkzeuges folgen. Das Aushärten unter Druck und Wärme erfolgt denn in der zuvor beschriebenen Weise.

## Patentansprüche

1. Verfahren zur Herstellung von Faserverbund-Formteilen, insbesondere Hohlprofilteilen, aus faserverstärktem Kunstharz, bei dem mit wärmeaushärtbarem Kunstharz vorimprägnierte, mindestens einseitig mit einer Trennfolie abgedeckte Fasermatten (Prepregs) in mehreren Lagen übereinander angeordnet werden, der so gebildete Schichtkörper gegebenenfalls in einem Formwerkzeug einer ersten Temperaturbehandlung unterworfen wird, dann die Trennfolien entfernt und anschließend in einem Formwerkzeug durch Druck auf die eine Oberfläche des Schichtkörpers dieser mit seiner anderen Oberfläche an eine Innenwand des Formwerkzeuges gepreßt und unter Aufrechterhaltung des Druckes das Kunstharz in einer zweiten Temperaturbehandlung bei erhöhter Temperatur ausgehärtet wird, **dadurch gekennzeichnet,** daß der Schichtkörper bei der ersten Temperaturbehandlung auf eine solche Temperatur abgekühlt wird, bei der die in den Prepregs enthaltenen Wasseranteile gefroren und die Prepregs dadurch nicht mehr klebrig sind, daß dann die Trennfolien entfernt und anschließend, während der Schichtkörper noch auf eine Temperatur abgekühlt ist, bei welcher die in den Prepregs enthaltenen Wasseranteile noch gefroren sind, der Druck auf die eine Oberfläche des Schichtkörpers ausgeübt und die andere Oberfläche desselben an die Innenwand des Formwerkzeuges angepreßt wird, und daß dann unter Erhitzung ausgehärtet wird.

2. Verfahren nach Anspruch 1, **dadurch gekennzeichnet,** daß die Abkühlung des Schichtkörpers auf unter -10°C (bei Atmosphärendruck) erfolgt.

3. Verfahren nach Anspruch 1 oder 2, **dadurch gekennzeichnet,** daß aus einem Prepreg durch Aufrollen ein Schichtkörper in Form eines hohlen Wickels gebildet wird, daß der Schichtkörper abgekühlt und dann die Trennfolie abgezogen wird, daß der gekühlte Schichtkörper in das gekühlte Formwerkzeug eingebracht und dort durch Druck auf seine innere Oberfläche seine äußere Oberfläche an die Innenwand des Formwerkzeuges gepreßt wird.

4. Verfahren nach Anspruch 3, **dadurch gekennzeichnet,** daß zur Ausübung des Druckes auf die innere Oberfläche ein aufblasbarer Schlauch verwendet wird.

5. Verfahren nach Anspruch 4, **dadurch gekennzeichnet,** daß zum Aufblasen des Schlauches ein gekühltes Gas verwendet wird.

6. Verfahren nach einem der Ansprüche 3 bis 5, **dadurch gekennzeichnet,** daß nach dem teilweisen oder vollständigen Aushärten des ersten Hohlprofilteiles an dessen innerer Oberfläche ein weiterer gekühlter Schichtkörper in Form eines Wickels angeordnet und durch Druck auf dessen innerer Oberfläche an die innere Oberfläche des ersten Hohlprofilteiles angepreßt und bei erhöhter Temperatur ausgehärtet wird.

7. Verfahren nach einem der Ansprüche 1 bis 6, **dadurch gekennzeichnet,** daß der Druck auf die eine Oberfläche des im Formwerkzeug angeordneten Schichtkörpers erfolgt, während dieser eine Temperatur von - 10°C bis - 25°C (bei Atmosphärendruck) aufweist.

8. Verfahren nach einem der Ansprüche 1 - 7, **dadurch gekennzeichnet,** daß das Formwerkzeug gekühlt wird, bevor der Druck auf die eine Oberfläche des gekühlten Schichtkörpers ausgeübt wird.
